# EUROPÄISCHE PATENTSCHRIFT

(11) **EP 0 675 818 B1**
(45) Veröffentlichungstag und Bekanntmachung des Hinweises auf die Patenterteilung: **12.05.1999**
(21) Anmeldenummer: 94928823.7
(22) Anmeldetag: 26.09.1994
(51) Int. Cl.: B60R 21/08, B60R 21/22

(54) **INSASSENSCHUTZVORRICHTUNG FÜR KRAFTFAHRZEUGE**
PASSENGER PROTECTION DEVICE FOR MOTOR VEHICLES
SYSTEME DE PROTECTION POUR PASSAGERS DE VEHICULES AUTOMOBILES

(30) Priorität: 04.11.1993 DE 4337656
(43) Veröffentlichungstag der Anmeldung: 11.10.1995
(73) Patentinhaber: AUDI AG, 85045 Ingolstadt (DE)
(72) Erfinder: VOLLMER, Elmar, D-83236 Feldwies (DE); HITZEROTH, Klaus, D-85051 Ingolstadt (DE)
(74) Vertreter: Engelhardt, Harald
(86) Internationale Anmeldenummer: EP9403214
(87) Internationale Veröffentlichungsnummer: WO9512504

(56) Entgegenhaltungen:
- DE-A- 3 632 877
- DE-A- 4 137 749
- FR-A- 2 122 189
- GB-A- 2 261 636
- US-A- 5 226 672

## Beschreibung

Die Erfindung bezieht sich auf eine Insassenschutzvorrichtung für Kraftfahrzeuge gemäß dem Oberbegriff des Anspruchs 1.

Eine derartige Insassenschutzvorrichtung ist aus der US-A-5 226 672 bekannt. Bei einem Aufprall wird ein in der Ruhelage im Fahrzeugdach untergebrachtes Rückhaltemittel (Netz) in eine Position vor die Insassen gebracht. Aufgrund der Konstruktion wirkt diese Schutzvorrichtung fast nur bei einem Frontaufprall.

Eine Maßnahme zum Schutz bei einem Seitenaufprall ist unter anderem Gegenstand der GB-A-2 261 636. Auch dort sind Zug- und Haltemittel in Verbindung mit einem im weiteren Sinne flächigen Rückhaltemittel gezeigt und beschrieben. Das Rückhaltemittel dient jedoch nicht dazu, den Kopf oder den Oberkörper eines Insassen aufzufangen, sondern zur Abstützung eines Seitenairbags, wenn die Seitenscheibe geborsten oder geöffnet ist.

Der Erfindung liegt die Aufgabe zugrunde, ohne Einsatz eines Airbags einen wirksamen Schutz für den Kopf eines Insassen bei einen Seitenaufprall auf das Fahrzeug zu schaffen.

Die Aufgabe wird durch die Merkmale des Patentanspruchs 1 gelöst.

Wie bei der vorbekannten Lösung wird bei einem Aufprall selbsttätig ein in der Nichtgebrauchsstellung zusammengefaltetes Gewebe zwischen der Fahrzeugkarosserie und dem Insassen aufgespannt. Bei der bekannten Lösung ist das Gewebe jedoch unmittelbar vor der Seitenscheibe bzw. dem Türrahmen angeordnet, so daß kaum ein Weg zum Auffangen des Insassen verbleibt. Die sich an den Türrahmen anschließenden Karosseriesäulen werden ohnehin nicht von dem Gewebe abgedeckt. Zutreffend wird deshalb in der GB-A-2 261 636 vorgeschlagen, das Gewebe zusammen mit einem Gassack einzusetzen. Das spannbare Rückhaltemittel verhindert dabei, daß bei zerstörter Seitenscheibe dem aufgeblasenen Gassack die seitliche Abstützung entzogen wird. Durch das spannbare Rückhaltemittel und den Gassack ist die Insassenschutzeinrichtung insgesamt sehr aufwendig und benötigt darüber hinaus relativ viel Platz, der in den neuzeitlichen Fahrzeugtüren oft nicht in ausreichendem Maße vorhanden ist.

Bei der neuen Lösung hingegen erstreckt sich das Gewebe bzw. eine entsprechende Folie vom Dachbereich zu einem Zugmittel, welches in der Wirkstellung vom Dach entfernt verläuft. Je nach der Befestigungsstelle des Gewebes am Dach bzw. Dachholm und der wirksamen Umlenkstelle des Zugmittels an der Karosseriesäule ergibt sich ein mehr oder weniger großer Abstand des Gewebes von der Karosserie und der Verglasung. In Abhängigkeit von den baulichen Gegebenheiten ist dabei ein möglichst großer Abstand anzustreben, so daß ein maximaler Weg zur Verzögerung für den Kopf des Insassen zur Verfügung steht. Positiv auf den Abstand wirkt sich der Umstand aus, daß bei moderneren Fahrzeugkarosserien die Bereiche über den Türbrüstungen zum Dach hin eingezogen sind. Betrachtet man diese Kontur als Kurve, dann bildet das Gewebe in der Wirkstellung eine Sehne, wobei der Abstand um so größer wird, je weiter die Befestigung des Gewebes zur Dachmitte hin erfolgt und je tiefer das Zugmittel an der Karosseriesäule umgelenkt wird.

Um letzteres erfüllen zu können und gleichzeitig sicherzustellen, daß in der Nichtgebrauchsstellung das Zugmittel im Bereich der Dachkontur und der Karosseriesäule verlaufen kann, ist die Umlenkeinrichtung so ausgeführt, daß erst bei Auslösung der Insassenschutzeinrichtung der Umlenkpunkt nach unten verlagert wird, wodurch sich ein möglichst großer Abstand zu der Karosseriesäule bzw. zu der Verglasung des Fahrzeuges ergibt.

Das Zugmittel ist dachseitig an einem stabilen Punkt im äußeren Dachbereich befestigt und von dort entlang eines äußeren Dachholmes bis zu der Umlenkeinrichtung im Bereich einer Karosseriesäule geführt. Von der Umlenkeinrichtung führt das Zugmittel weiter bis zu einer sensorgesteuerten Zugeinrichtung im unteren Abschnitt der Karosseriesäule. In dem Abschnitt vor der Umlenkeinrichtung nimmt das Zugmittel das freie Ende des an dem zugeordneten Dachbereich befestigten, reißfesten Gewebes auf. In der Nichtgebrauchsstellung ist das reißfeste Gewebe oder eine entsprechende Folie zusammengefaltet im Dachbereich verstaut.

Die Insassenschutzvorrichtung kann dazu dienen, die Insassen bei einem Front-, Heck- oder Seitenaufprall zu schützen. Je nach der gewünschten Aufgabe ist die Schutzvorrichtung an entsprechender Stelle unter Einbeziehung der zugeordneten Karosseriesäule anzuordnen. Selbstverständlich ist es möglich, mehrere Schutzvorrichtungen entweder für mehrere Insassen und/oder verschiedene Aufprallarten (beispielsweise für Front- und Seitenaufprall) zu verbauen. Es versteht sich von selbst, daß dann auch entsprechende, auf die jeweiligen Belastungen reagierende Sensoren einzusetzen sind.

Das Zugmittel ist entlang von zwei, einen Winkel einschließenden, äußeren Dachholmen angeordnet. Durch diese Ausgestaltung wird ein vergrößerter Abstand des Gewebes zur Karosseriestruktur/verglasung erreicht. Für die Verzögerung des Insassen - insbesondere seines Kopfes - bei einem Aufprall steht somit ein größerer Weg zur Verfügung, wodurch die Belastung und damit das Verletzungsrisiko wesentlich reduziert wird.

Zwischen der Befestigungsstelle am Dachholm und der Zugvorrichtung ist das Zugmittel durch ein Halteelement fixiert, welches an einer vorderen oder hinteren Dachsäule befestigt ist. Über das Halteelement kann der Verlauf des Zugmittels und damit die von dem Gewebe gebildete Fläche in einem weiten Umfang beeinflußt werden. Das Zugmittel kann sich durch das Halteelement nicht mehr geradlinig von seiner Befestigungsstelle an dem Dachholm zu dem Umlenkpunkt in der Karosseriesäule erstrecken, sondern bildet auch in gespanntem Zustand einen Winkel. Demzufolge ist auch das Gewebe nicht mehr im wesentlichen dreieckförmig, sondern etwa rechteckig und deckt dadurch einen größeren Bereich ab.

Das Zugmittel und das Halteelement lassen sich in Verbindung mit den Befestigungsstellen und dem wirksamen Umlenkpunkt so abstimmen, daß bei Auslösung das Gewebe/die Folie zunächst in Richtung nach unten und dann erst zum Insassen hin bewegt wird. Dadurch läßt sich eine kopfnahe Schutzposition des Gewebes/ der Folie erreichen, ohne den Insassen bei einer ungünstigen Sitzposition oder Kopfstellung durch das sich spannende Gewebe zu gefährden.

Gemäß Anspruch 1 ist die Umlenkeinrichtung im oberen Bereich der Karosseriesäule so ausgeführt, daß der wirksame Umlenkpunkt des Zugmittels zwischen Dachbereich und Zugeinrichtung liegt. Damit wird erreicht, daß die Zugmittel entlang der Dachholme und der Karosseriesäule verlegt werden können und bei Aktivierung der Sicherheitseinrichtung der Umlenkpunkt für das Zugmittel in der Karosseriesäule nach unten verschoben wird. Dafür kann ein die Umlenkeinrichtung tragender, verschiebbarer Schlitten an der Karosseriesäule vorgesehen werden.

Eine besonders einfache und kostengünstige Möglichkeit, den Umlenkpunkt an der Karosseriesäule zu verlagern, besteht darin, daß bei durch ein Verkleidungsteil abgedecktem Zugmittel und im unteren Abschnitt der Karosseriesäule angeordneten ortsfesten Umlenkpunkt bei Straffung des Zugmittel dieses das Verkleidungsteil anhebt oder wegbricht.

Im Sinne eines optimierten Schutzes ist es vorteilhaft, wenn zwei Zugmittel vorgesehen sind, welche aufeinander zu verlaufen und in einer gemeinsamen Karosseriesäule umgelenkt werden. Dadurch läßt sich beispielsweise ein Beifahrer sowohl bei einem Frontaufprall, als auch bei einem Seitenaufprall schützen. Gleichsam ist es möglich, die auf derselben Seite, hintereinander untergebrachten Fahrzeuginsassen bei einem Seitenaufprall zu sichern oder für einen Fondpassagier Schutz bei einem Seitenaufprall und bei einem Heckaufprall zu gewähren.

Im letzteren Fall könnte eine ansonsten notwendige Kopfstütze für die Rücksitzbank entfallen, wodurch auch die Sicht nach hinten verbessert wird.

Bei Umlenkung von zwei Zugmitteln in einer gemeinsamen Karosseriesäule ist es zweckmäßig, wenn die beiden Zugmittel durch die gleiche Zugeinrichtung betätigbar sind.

In weiterer Ausgestaltung können die beiden Zugmittel eine Einheit bilden und im Bereich der Zugeinrichtung um 360° umgelenkt werden. Die Umlenkung kann durch eine Rolle oder ein ähnliches Bauteil erfolgen. Die Zugeinrichtung könnte in diesem Fall an der Achse der Umlenkung angreifen und diese nach unten ziehen.

In einer bevorzugten Ausführungsform wird die gemeinsame Karosseriesäule durch die sich an den vorderen Türausschnitt nach hinten anschließende Mittelsäule der Fahrzeugkarosserie gebildet. Bei dieser Ausgestaltung handelt es sich dann um eine bei einem Seitenaufprall wirksam werdende Schutzvorrichtung für die beiden auf der entsprechenden Fahrzeugseite untergebrachten Insassen. Durch ihre Dimensionierung ist die Mittelsäule auch in besonderer Weise geeignet, die entsprechenden Bauteile sowohl kraft- als auch platzmäßig aufzunehmen. Für eine bei einem Seitenaufprall wirksam werdende Schutzvorrichtung besteht außerdem ein besonderes Bedürfnis, da gerade bei einem Seitenaufprall das Verletzungsrisiko sehr groß ist. Die bekannten Einrichtungen zum Kopfschutz sind sehr aufwendig und benötigen viel Platz, wodurch eine Realisierung bisher gescheitert ist.

Bei Verwendung der Mittelsäule zur Aufnahme der Umlenkeinrichtung und der Zugeinrichtung wird das Ende des Zugmittels an dem oberen Querholm für die Frontscheibe oder dem oberen Querholm für die Heckscheibe befestigt. Diese Querholme sind ausreichend stabil und geeignet, insbesondere in Verbindung mit verklebter Front- und Heckscheibe, die auftretenden Belastungen in die Fahrzeugkarosserie einzuleiten.

In Verbindung mit Automatik-Sicherheitsgurten werden zunehmend sog. Gurtstrammer eingesetzt, die mechanisch, pyrotechnisch, hydraulisch oder pneumatisch betätigt werden. Wenn die Zugeinrichtung für die Zugmittel in der Mittelsäule angeordnet ist, dann ist es besonders vorteilhaft, wenn die Zugeinrichtung über die Strammvorrichtung betätigt wird. Ein separates Antriebsmittel für die Zugeinrichtung kann somit entfallen. Ggf. ist auch ein separater Sensor entbehrlich. Für die Koppelung der Zugeinrichtung ist es unbedeutend, ob es sich um eine unmittelbar auf den Sicherheitsgurt einwirkende Strammvorrichtung handelt, oder ob die Strammvorrichtung auf die Aufwickelvorrichtung für den Sicherheitsgurt einwirkt. In beiden Fällen lassen sich ohne Probleme entsprechende Anschlüsse für die Zugeinrichtung realisieren, wodurch der Bauaufwand für die vorgeschlagene Schutzeinrichtung wesentlich reduziert wird.

Bevorzugt wird für das Zugmittel ein Seil eingesetzt. Das Halteelement kann ebenfalls durch ein Seil gebildet sein. Für das Halteelement ist jedoch auch ein Gurtband oder ein ähnliches Bauteil verwendbar.

Gemäß einer vorteilhaften Ausgestaltung kann das Zugmittel und/oder das Halteelement mit einem energieabsorbierenden Bauteil gekoppelt sein. Darüber läßt sich eine gezielte Verzögerung des Kopfes eines Insassen erreichen, wenn dieser auf die Fangeinrichtung aufschlägt. Als energieabsorbierendes Bauteil können an sich bekannte Bauteile, beispielsweise Deformationselemente, Verwendung finden. Diese können zwischengeschaltet sein oder aber an dem Zugmittel bzw. dem Halteelement angreifen und eine andere Befestigungsstelle aufweisen.

Das Zugmittel und/oder das Halteelement sowie die Gewebebahn/Folie wird zweckmäßig hinter einem Innenverkleidungsteil angeordnet. Das Innenverkleidungsteil kann beispielsweise eine Abdeckung für die vordere, hintere oder mittlere Dachsäule bzw. eine Abdeckung für die Dachholme sein.

In Verbindung mit einem vorgeformten Fahrzeughimmel kann dieser zumindest das Zugmittel und die Gewebebahn/Folie abdecken.

Da weder die Zugmittel, noch die Halteelemente und die zusammengefaltete Gewebebahn viel Platz benötigen, muß sich ein mit der vorgeschlagenen Insassenschutzvorrichtung ausgerüstetes Fahrzeug kaum von herkömmlichen Fahrzeugen unterscheiden. Auch ist die Realisierung einer Dachöffnung mit einem Schiebe- oder Ausstelldeckel nicht beeinträchtigt.

Um beispielsweise beim Eindringen eines Baumes bis zu der vorgeschlagenen Fangvorrichtung zusätzlichen Schutz zu gewähren, kann ein Luftpolster vorgesehen sein. Das Luftpolster wird an dem Gewebe bzw. der Folie angeordnet oder vorteilhaft durch eine zweilagige Ausgestaltung durch diese selbst gebildet. Die Aktivierung eines solchen Luftpolster erfolgt zusammen mit der Fangeinrichtung.

In weiterer Ausgestaltung kann das Luftpolster das Zugmittel nach unten übergreifen. Diese Ausgestaltung ist vorteilhaft, da das Zugmittel das am wenigsten nachgiebige Bauteil der Rückhaltevorrichtung darstellt.

Ein Ausführungsbeispiel der Erfindung ist in der Zeichnung näher dargestellt. Es zeigen
- **Fig. 1**: in schematischer Darstellung einen Schnitt durch eine Fahrzeugkarosserie quer zur Fahrtrichtung im Bereich einer Mittelsäule,

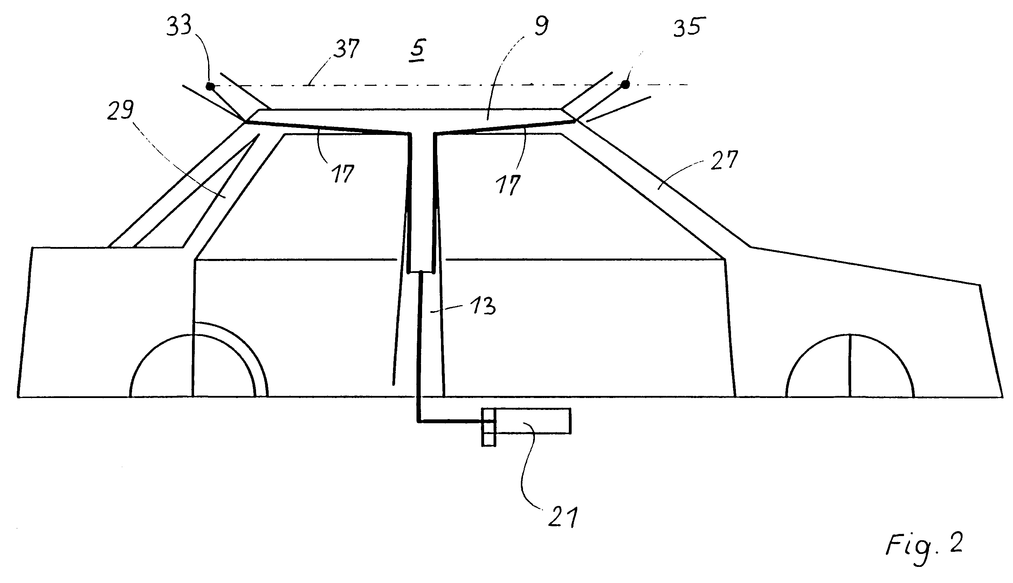

- **Fig. 2**: in Seitenansicht eine Fahrzeugkarosserie mit einer Insassenschutzvorrichtung in der Ausgangslage und
- **Fig. 3**: die Fahrzeugkarosserie aus Fig. 2 mit der Insassenschutzvorrichtung in aktiviertem Zustand.

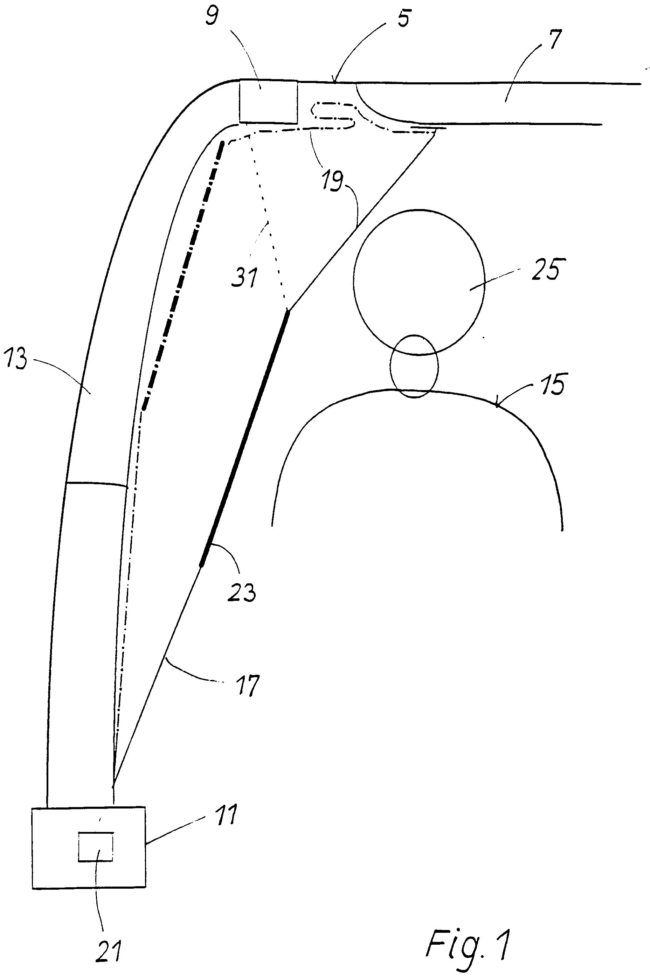

Die Darstellung in Fig. 1 zeigt ein Dach 5, welches ein Schiebedach 7 aufnimmt. Das Dach 5 ist durch einen seitlichen Dachholm 9 begrenzt. An diesen schließt sich eine bis zu einem Türschweller 11 reichende Mittelsäule 13 an.

Zur Sicherung eines Insassen (15) bei einem Seitenaufprall ist eine Insassenschutzvorrichtung installiert. Diese umfaßt als wesentliche Bauteile ein durch ein Seil 17 gebildetes Zugmittel sowie ein reißfestes Gewebe 19. Während das obere Ende des Seiles 17 an einen sich in Fahrzeugquerrichtung erstreckenden vorderen Dachholm (nicht dargestellt) befestigt ist, ist das untere Ende des Seiles 17 in einer Zugeinrichtung 21 aufgenommen. Die Zugeinrichtung 21 wird bei einem Seitenaufprall sensorgesteuert aktiviert. Dabei zieht die Zugeinrichtung 21 das Seil 17 nach unten. Das Seil 17 nimmt dann die in der Zeichnung mit durchgehenden Linien dargestellte Position ein, während die Ausgangslage strichpunktiert dargestellt ist. In der Ausgangslage wird das Seil 17 durch entsprechende Innenverkleidungsteile abgedeckt. Ein, mit 23 bezeichnetes Innenverkleidungsteil ist in der Zeichnung schematisch als dicke Linie dargestellt. In der Ausgangslage verkleidet es den oberen Abschnitt der Mittelsäule 13. Wenn das Seil 17 durch die Zugeinrichtung 19 bei einem Seitenaufprall gestrafft wird, dann reißt es das Innenverkleidungsteil 21 und Teile der Dachverkleidung aus ihren Befestigungen.

Gleichzeitig zieht es das in der Ausgangslage ebenfalls von Verkleidungsteilen abgedeckte reißfeste Gewebe in eine den Kopf 25 des Insassen schützende Stellung nach unten. Um einen günstigen Verlauf des Gewebes zu erreichen, sind jeweils an der vorderen Dachsäule 27 und der hinteren Dachsäule 29 Haltemittel in Form von Bändern 31 befestigt, die mit dem Seil 17 verbunden sind.

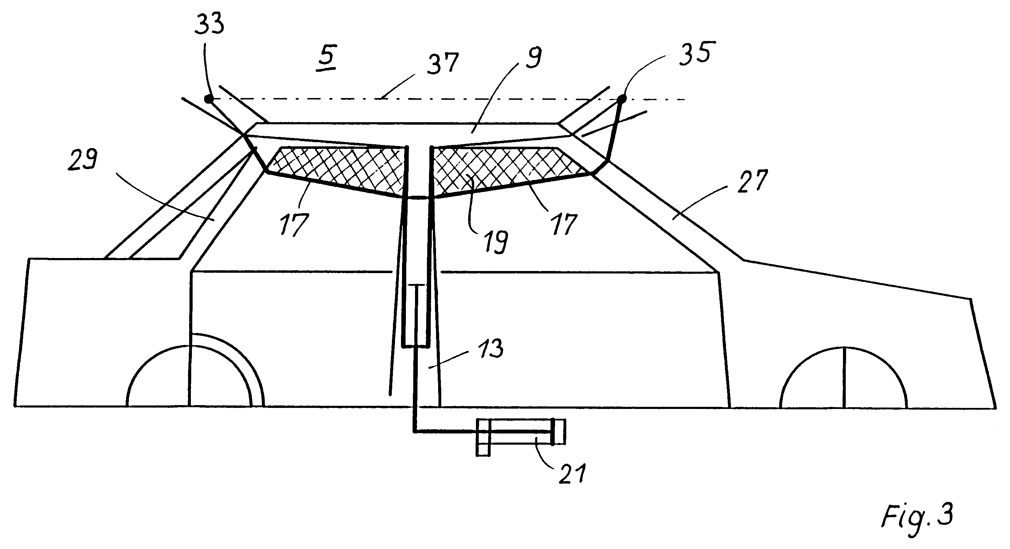

Aus Fig. 3 ist zu ersehen, wie sich das aktivierte Gewebe 19 in Fahrzeuglängsrichtung erstreckt. In der gewählten Ausführungsform hat das reißfeste Gewebe 19 eine etwa rechteckige Form. Es schwenkt von den Befestigungspunkten 33 und 35 im hinteren bzw. vorderen Querholm des Daches 5 um eine gedachte Linie 37. Das Gewebe 19 ist etwa im Bereich der Linie 37 am Dach 5 befestigt. Die gegenüberliegenden Endbereiche sind mit den zugeordneten Abschnitten des Seiles 17 - beispielsweise unter Bildung eines Saumes - verbunden.

Das Seil 17 ist von seiner Befestigungsstelle 33 zur Mittelsäule 13 geführt. Dort wird es schlaufenförmig umgelenkt und zu seiner Befestigungsstelle 35 im vorderen Dachquerholm geführt. An der Umlenkstelle in der Mittelsäule 13 greift die Zugeinrichtung 21 an und strafft dadurch sowohl den vorderen, als auch den hinteren seilabschnitt.

## Patentansprüche

1. Insassenschutzvorrichtung für Kraftfahrzeuge, mit einem flächigen Rückhaltemittel (19), welches von seinem zusammengefalteten Ruhezustand im Dach (5) sensorgesteuert über ein Zugmittel (17) in eine den Kopf (25) des Insassen schützende Wirkstellung bewegbar ist, wobei das Zugmittel (17) nach Auslösen einer Zugvorrichtung (21) aus seiner Unterbringungsstelle im seitlichen Dachholm (9) und einer sich daran anschließenden Mittelsäule (13), welche in ihrem unteren Bereich die Zugvorrichtung (21) aufnimmt, heraustritt und das Rückhaltemittel (19) auf den Insassen (15) zubewegt, gekennzeichnet durch folgende Merkmale:
- der obere Rand des Rückhaltemittels der Art eines reißfesten Gewebes oder einer Folie (19) ist im Abstand von dem zugeordneten seitlichen Dachholm (9) am Dach (5) befestigt,
- der untere Rand des Rückhaltemittels (19) wird von dem Zugmittel (17) aufgenommen,
- das der Zugvorrichtung (21) abgewandte Ende des Zugmittels (17) ist am vorderen oder hinteren Dachholm im Abstand von dem seitlichen Dachholm befestigt,
- zwischen der Befestigungsstelle (33 bzw. 35) am vorderen oder hinteren Dachholm und der Zugvorrichtung (21) ist das Zugmittel (17) durch ein Halteelement (31) fixiert, welches an einer vorderen oder hinteren Dachsäule (27) befestigt ist,
- die Befestigungsstellen (33 bzw. 35) und Längen des Zugmittels (17) und des Halteelements (31) sind so abgestimmt, daß darüber das in Wirkstellung befindliche Rückhaltemittel (19) ausgehend von seiner Befestigungsstelle am Dach (5) schräg nach außen und unten verläuft.

2. Insassenschutzeinrichtung nach Anspruch 1, dadurch gekennzeichnet, daß das Zugmittel (17) über einen in der Karosseriesäule (13) angeordneten, nach unten verschiebbaren Schlitten geführt ist.

3. Insassenschutzeinrichtung nach einem der Ansprüche 1 oder 2, dadurch gekennzeichnet, daß die Karosseriesäule (13) und das daran angeordnete Zugmittel (17) durch ein Verkleidungsteil (23) zum Fahrgastraum hin abgedeckt sind und, bedingt durch einen im unteren Abschnitt der Karosseriesäule (13) angeordneten ortsfesten Umlenkpunkt, bei Straffung des Zugmittels (9) das Verkleidungsteil (23) abgehoben wird.

4. Insassenschutzeinrichtung nach einem der Ansprüche 1 bis 3, dadurch gekennzeichnet, daß zwei Zugmittel (17) vorgesehen sind, welche aufeinander zu verlaufen und in einer gemeinsamen Karosseriesäule (13) umgelenkt werden.

5. Insassenschutzvorrichtung nach Anspruch 4, dadurch gekennzeichnet, daß die beiden Zugmittel (17) durch die gleiche Zugeinrichtung (21) betätigbar sind.

6. Insassenschutzvorrichtung nach Anspruch 4 und 5, dadurch gekennzeichnet, daß die beiden Zugmittel (17) eine Einheit bilden und im Bereich der Zugeinrichtung (21) um 360° umgelenkt werden.

7. Insassenschutzeinrichtung nach einem der Ansprüche 4 bis 6, dadurch gekennzeichnet, daß die gemeinsame Karosseriesäule durch die sich an den vorderen Türausschnitt nach hinten anschließende Mittelsäule (21) der Fahrzeugkarosserie gebildet ist.

8. Insassenschutzvorrichtung nach Anspruch 7, dadurch gekennzeichnet, daß mindestens ein Ende eines Zugmittels (17) an dem oberen Querholm für die Frontscheibe oder für die Heckscheibe befestigt ist.

9. Insassenschutzvorrichtung mit einer im Bereich der Mittelsäule angeordneten Strammvorrichtung für Sicherheitsgurte nach Anspruch 7 oder 8, dadurch gekennzeichnet, daß die Zugeinrichtung für die Zugmittel (17) über die Strammvorrichtung betätigt wird.

10. Insassenschutzvorrichtung nach einem der Ansprüche 1 bis 9, dadurch gekennzeichnet, daß das Zugmittel durch ein Seil (17) gebildet ist.

11. Insassenschutzvorrichtung nach einem der Ansprüche 1 bis 10, dadurch gekennzeichnet, daß ein Seil oder ein Gurtband das Halteelement bildet.

12. Insassenschutzvorrichtung nach einem der Ansprüche 1 bis 11, dadurch gekennzeichnet, daß das Zugmittel (17) und/oder das Halteelement (31) mit einem energieabsorbierenden Bauteil gekoppelt ist.

13. Insassenschutzvorrichtung nach einem der Ansprüche 1 bis 12, dadurch gekennzeichnet, daß das Zugmittel (17) und/oder das Halteelement (31) sowie das Gewebe (19)/Folie hinter einem Innenverkleidungsteil angeordnet ist.

14. Insassenschutzvorrichtung nach Anspruch 13, dadurch gekennzeichnet, daß das Innenverkleidungsteil ein vorgeformter Fahrzeughimmel ist.

15. Insassenschutzeinrichtung nach einem der Ansprüche 1 bis 14, dadurch gekennzeichnet, daß beim Aktivieren der Insassenschutzvorrichtung gleichzeitig ein Luftpolster gefüllt wird, welches an dem reißfesten Gewebe/der Folie angeordnet oder durch diese gebildet ist.

16. Insassenschutzeinrichtung nach Anspruch 15, dadurch gekennzeichnet, daß das Luftpolster das Zugmittel (17) nach unten übergreift.

## Claims

1. Occupant protection device for motor vehicles, having a two-dimensional restraint means (19) which is adapted to be moved in a sensor-controlled manner from its folded-up state of rest in the roof (5) via a traction means (17) into an operative position which protects the head (25) of the occupant, where following the triggering of a traction device (21) the traction means (17) moves out of the location in which it is accommodated in the lateral roof spar (9) and out of a central pillar (13) which is contiguous therewith and which receives the traction device (21) in its lower portion, and moves the restraint means (19) towards the occupant (15), characterised by the following features:
- the top edge of the restraint means (19) having the nature of a non-tear fabric or a foil is attached to the roof (5) at a distance from the associated lateral roof spar (9),
- the bottom edge of the restraint means (19) is received by the traction means (17),
- the end of the traction means (17) that is remote from the traction device (21) is attached to the front or rear roof spar at a distance from the lateral roof spar,
- between the point of attachment (33 or 35, respectively) on the front or rear roof spar and the traction device (21) the traction means (17) is fixed in place by a retaining element (31) which is attached to a front or rear roof pillar (27),
- the attachment points (33 or 35, respectively) and lengths of the traction means (17) and of the retaining element (31) are coordinated in such a manner that above them the restraint means (19) in the operative position runs diagonally outwards and downwards from its point of attachment to the roof (5).

2. Occupant protection device according to claim 1, characterised in that the traction means (17) is led via a downwardly displaceable slide block arranged in the body pillar (13).

3. Occupant protection device according to either of claims 1 or 2, characterized in that the body pillar (13) and the traction means (17) disposed thereon are covered by a section of trim (23) towards the passenger compartment and, dependent on a stationary reversal point disposed in the lower section of the body pillar (13), the section of trim (23) is raised when the traction means (9) is tensioned.

4. Occupant protection device according to any of claims 1 to 3, characterized in that two traction means (17) are provided which are reversed so as to run over one another in a common body pillar (13).

5. Occupant protection system according to claim 4, characterised in that the two traction means (17) are adapted to be actuated by the same traction mechanism (21).

6. Occupant protection system according to claims 4 and 5, characterized in that the two traction means (17) constitute one unit and are reversed through 360° in the region of the traction mechanism (21).

7. Occupant protection system according to any one of claims 4 to 6, characterised in that the common body pillar is constituted by the vehicle body's central pillar (21) which is joined rearwards of the front door cutout.

8. Occupant protection system according to claim 7, characterised in that not less than one end of a traction means (17) is attached to the upper transverse spar for the windscreen or for the rear window.

9. Occupant protection system having a seat belt tensioning system disposed in the region of the central pillar according to claim 7 or 8, characterised in that the traction mechanism for the traction means (17) is actuated via the tensioning system.

10. Occupant protection system according to any one of claims 1 to 9, characterised in that the traction means is constituted by a cable (17).

11. Occupant protection system according to any one of claims 1 to 10, characterised in that a cable or a belt band constitutes the retaining element.

12. Occupant protection system according to any one of claims 1 to 11, characterised in that the traction means (17) and/or the retaining element (31) is coupled with an energy-absorbing component.

13. Occupant protection system according to any one of claims 1 to 12, characterised in that the traction means (17) and/or the retaining element (31) and the fabric (19)/foil is disposed behind a section of interior trim.

14. Occupant protection system according to claim 13, characterised in that the section of interior trim is a pre-formed vehicle headliner.

15. Occupant protection system according to any one of claims 1 to 14, characterised in that simultaneously with the activation of the occupant protection system an airbag is inflated which is disposed on the non-tear fabric/foil or is constituted by the latter.

16. Occupant protection system according to claim 15, characterized in that the airbag downwardly overlaps the traction means (17).

## Revendications

1. Dispositif de protection pour passagers de véhicules automobiles, comprenant un moyen plat de retenue (19), qui est déplaçable d'une manière commandée par un capteur, par l'intermédiaire d'un moyen de traction (17), depuis un état de repos, dans lequel le moyen de retenue est replié, dans le toit (5) jusque dans une position active protégeant la tête (25) du passager, dans lequel après le déclenchement d'un dispositif de traction (21), le moyen de traction (17) se dégage de sa position de logement dans le longeron latéral de toit (9) et d'un montant médian (13), qui se raccorde à ce longeron de toit et loge, dans sa partie inférieure, le dispositif de traction (21), et déplace le moyen de retenue (19) en direction du passager (15), caractérisé par les caractéristiques suivantes :
- le bord supérieur du moyen de retenue (19) agencé à la manière d'un tissu résistant à l'arrachement ou d'une feuille est fixé au toit (5) à distance du longeron latéral associé de toit (9),
- le bord inférieur du moyen de retenue (19) est reçu par le moyen de traction (17),
- l'extrémité, tournée à l'opposé du dispositif de traction (21), du moyen de traction (17) est fixée sur le longeron avant ou arrière de toit à distance du longeron latéral de toit,
- le moyen de traction (17) est fixé, entre le point de fixation (33 ou 35) sur le longeron avant ou arrière de toit et le dispositif de traction (21), par un élément de retenue (31), qui est fixé sur un montant avant ou arrière de toit (27),
- les points de fixation (33 et 35) et les longueurs du moyen de traction (17) et de l'élément de retenue (31) sont accordés entre eux de telle sorte que le moyen de retenue (19) situé dans la position active s'étend obliquement vers l'extérieur et vers le bas à partir de son point de fixation sur le toit (5).

2. Dispositif de protection pour passagers selon la revendication 1, caractérisé en ce que le moyen de traction (17) est guidé par l'intermédiaire d'un coulisseau qui est disposé dans le montant (13) de la carrosserie et peut se déplacer selon un mouvement descendant.

3. Dispositif de protection pour passagers selon la revendication 1 ou 2, caractérisé en ce que le montant (13) de la carrosserie et le moyen de traction (17) disposé sur ce montant sont recouverts par un élément d'habillage (23) du côté de l'habitacle et lorsque le moyen de traction (9) est tendu, l'élément d'habillage (23) est écarté, d'une manière conditionnée par un point fixe de déviation installé dans la partie inférieure du montant (13) de la carrosserie.

4. Dispositif de protection pour passagers selon l'une des revendications 1 à 3, caractérisé en ce que deux moyens de traction (17) sont prévus, qui s'étendent l'un vers l'autre et sont déviés dans un montant commun (13) de la carrosserie.

5. Dispositif de protection pour passagers selon la revendication 4, caractérisé en ce que les deux moyens de traction (17) peuvent être actionnés par le même dispositif de traction (21).

6. Dispositif de protection pour passagers selon les revendications 4 et 5, caractérisé en ce que les deux moyens de traction (17) forment une unité et sont déviés sur 360° dans la zone du dispositif de traction (21).

7. Dispositif de protection pour passagers selon l'une des revendications 4 à 6, caractérisé en ce que le montant commun de la carrosserie est formé par le montant médian (13) de la carrosserie du véhicule, qui se raccorde, sur le côté arrière, à la découpe de portière avant.

8. Dispositif de protection pour passagers selon la revendication 7, caractérisé en ce qu'au moins une extrémité d'un moyen de traction (17) est fixée sur la traverse supérieure pour le pare-brise ou pour la vitre arrière.

9. Dispositif de protection pour passagers comportant un rétracteur de ceinture de sécurité, disposé au niveau du montant médian, selon la revendication 7 ou 8, caractérisé en ce que le dispositif de traction pour les moyens de traction (17) est actionné au moyen du rétracteur.

10. Dispositif de protection pour passagers selon l'une des revendications 1 à 9, caractérisé en ce que le moyen de traction est formé par un câble (17).

11. Dispositif de protection pour passagers selon l'une des revendications 1 à 10, caractérisé en ce qu'un câble ou une sangle de ceinture forme l'élément de retenue.

12. Dispositif de protection pour passagers selon l'une des revendications 1 a 11, caractérisé en ce que le moyen de traction (17) et/ou l'élément de retenue (31) est accouplé à un composant absorbant de l'énergie.

13. Dispositif de protection pour passagers selon l'une des revendications 1 à 12, caractérisé en ce que le moyen de traction (17) et/ou l'élément de retenue (31) ainsi que le tissu (19)/la feuille sont disposés derrière un élément d'habillage intérieur.

14. Dispositif de protection pour passagers selon la revendication 13, caractérisé en ce que l'élément d'habillage intérieur est un plafond préformé du véhicule.

15. Dispositif de protection pour passagers selon l'une des revendications 1 à 14, caractérisé en ce que lors de l'activation du dispositif de protection pour passagers, un coussin d'air, qui est disposé sur le tissu résistant a l'arrachement/la feuille ou est formé par ce tissu/cette feuille, est gonflé simultanément.

16. Dispositif de protection pour passagers selon la revendication 15, caractérisé en ce que le coussin d'air s'engage au-dessous du moyen de traction (17).
